Europäisches Patentamt

European Patent Office

Office européen des brevets

(19)

(11) Publication number: **0 038 184**
A2

# (12) EUROPEAN PATENT APPLICATION

(21) Application number: **81301567.4**

(22) Date of filing: **10.04.81**

(51) Int. Cl.³: **B 65 G 17/12, B 65 G 47/38**

(30) Priority: **11.04.80 GB 8012004**

(43) Date of publication of application: **21.10.81**
**Bulletin 81/42**

(84) Designated Contracting States: **AT BE CH DE FR GB IT LI NL SE**

(71) Applicant: **J.H. FENNER & CO. LIMITED, Marfleet, Hull North Humberside, HU9 5RA (GB)**

(72) Inventor: **Donaldson, William Kenneth, 12, The Meadows Cherry Burton, Beverley North Humberside (GB)**
Inventor: **Fryatt, Leslie Alva, 20, Talbot Road, Accrington Lancashire (GB)**
Inventor: **Wain, Frank Ciro, 43, Normandy Avenue, Beverley North Humberside (GB)**

(74) Representative: **Ranson, Arthur Terence et al, W.P. Thompson & Co. Coopers Building Church Street, Liverpool L1 3AB (GB)**

(54) Improvements in or relating to endless conveyors.

(57) An endless conveyor comprises a plurality of individual wheeled carriers (12) which are supported directly on parallel main guide tracks (32, 34). In order to enable the carriers (12) to be selectively tilted from their normal horizontal attitudes to tip their loads at a chosen one of a plurality of discharge stations (162), there are provided at each discharge station a pair of auxiliary guide tracks (32a, 32b, 34a, 34b) branching from each main guide track, with one auxiliary guide path (32a or 34a) of each pair upwardly inclined towards its downstream end and the other auxiliary guide path (32b or 34b) of that pair downwardly inclined. A device (144) enables the carriers (12) to be selectively diverted in a lateral direction from the main guide tracks on to selected pairs of said auxiliary tracks whereby to tilt the selected carrier to one side of the main guide tracks or to the other side, as required.

0038184

1.

DESCRIPTION

"IMPROVEMENTS IN OR RELATING TO ENDLESS CONVEYORS"

This invention concerns conveyors and relates more particularly to conveyors of which the conveying surface is defined by a plurality of individual carriers such as platforms, slats or trays.

Conveyors of this type in which the conveying surface is defined by a plurality of slats are often used as so-called sorting conveyors, for which purpose the individual slats are arranged to be capable of being tilted in order that they may be caused to discharge their conveyed loads, according to predetermined instructions, at various stations along the length of the conveyor. Examples of sorting conveyors are to be found in British Patent Specification Nos. 1,040,915 and 1,544,570 and it may be noted that in each instance, each tiltable slat is pivotally secured to or mounted upon a carriage arranged for movement along a guide track, a quite sophisticated pivoting mechanism selectively actuated by additional deflector means being required to cause the slat to be tilted relative to the carriage. Not only are such additional mechanisms expensive to construct and to maintain in reliable service but they appear to dictate to the slat and carriage components, a geometry such that the carriage can be supported only on wheels which are relatively small compared to the dimensions of the carriage itself, a feature which can lead to noisy operation, restricted load carrying capability of the carriage and short service life of the wheels before replacement is required.

In order to avoid these disadvantages, in a conveyor comprising a plurality of individual carriers constrained for movement along a predetermined guide path, in its broadest aspect the present invention accordingly provides that the carriers themselves are wheeled carriers supported in a load-carrying manner directly upon said path and that means are arranged for selectively diverting said carriers from said guide path on to auxiliary guide paths having configurations acting bodily to tilt said carriers in their movement along said auxiliary paths.

By eliminating the need for expensive, separate tilting mechanisms, the invention not only reduces both the initial and the maintenance costs of the conveyor but also removes the geometrical constraints imposed by such mechanisms, enabling much larger wheels to be used than has been possible in earlier comparable constructions.

According to one preferred construction provided by the invention, a conveyor comprises guide means including a pair of spaced, parallel main guide paths, endless drive means adjacent said guide means, a plurality of wheeled carrier members supported on said guide paths to define a conveying surface and coupled to said drive means for propelling said carrier members around said guide means, a plurality of discharge stations arranged along said guide means and each including at least one auxiliary path branching from each main guide path at the upstream end of said discharge station and extending in the direction of movement of said carrier members, with one of said auxiliary guide paths being upwardly inclined towards its downstream and and the other auxiliary guide path being downwardly inclined, both said auxiliary guide paths being located at the same side of their respectively associated main guide paths, and means for selectively diverting said carrier members at the upstream end of each discharge station from said main guide paths on to said auxiliary paths, whereby to tilt each diverted carrier member in a direction transverse to its direction of movement along said paths.

It will be understood that, in a conveyor construction as described immediately above, a separate drive means may be omitted and the carrier members may be articulated together in a power transmitting manner in order themselves additionally to constitute a drive means.

Although the guide means may be a guide track including a pair of running rails constituting said guide paths and auxiliary rails presenting said auxiliary paths, both the main and the auxiliary guide paths may be embodied in pressings or castings, preferably of metal.

Conveniently, there may be two auxiliary guide paths branching one from each side of each main guide path at the upstream end of each discharge station, with one such auxiliary path upwardly inclined and the other downwardly inclined, such that each co-operates with an auxiliary guide path of opposite inclination branching from the other main guide path, thus enabling a selected carrier member to be tilted to either one side of the guide means or to the other side thereof, as required.

Although the carrier members may be diverted from the main guide paths on to selected pairs of auxiliary guide paths by arranging deflectors similar to the angularly movable tongues of railway points at the upstream end of each discharge station or by acting on the carrier members by means such as a pneumatic ram to move them bodily, a reliable and simpler diverter according to another feature of the invention comprises a rigid, pivoted arm mounted to present its free end adjacent the guide means and capable of being displaced to intercept a suitable side region of a carrier member, the subsequent movement of which, after interception has taken place, is employed to rotate

4.

the arm on its pivot and cause it simultaneously to impart the required lateral movement or displacement to the carrier member.

The invention may be particularly conveniently (although not exclusively) applied to so-called slat conveyors which are frequently used in large-scale sorting operations and in connection with such slat conveyors, it is another object of the invention to provide an improved construction of slat. Since, in use, adjacent slats of such conveyors may at various times positioned at angles to one another, and at such times, any load being carried by a slat can be sliding along it, it can happen that a portion of the carrier load may enter the space between the edges of two adjacent slats and slide in such a direction that it is sliding between mutually approaching surfaces of converging slats, thus becoming trapped. In order to overcome this difficulty, the invention provides each slat with a skirt arrangement which in its simplest form comprises side walls which are preferably of a flexible nature and which may increase in depth from the middle of the slat towards and up to its end edges, so that potentially dangerous gaps between periodically converging surfaces of adjacent slats are eliminated. If desired, the skirts or side walls, when flexible, may be arranged to press resiliently against one another, so reducing the possibility that small articles might pass between the slats and interfere with the conveyor mechanism below them, in a space difficult of access for cleaning.

Another feature of the invention relating to the slat construction is intended to mitigate against difficulties which can be experienced in some circumstances in connection with surface friction. For several

5.

reasons, polypropylene has proved to be a popular and successful material for slat construction but it can give rise to unexpectedly high coefficients of limiting friction in conditions of high relative humidity when a load being carried is wrapped in plastics sheeting or at temperatures at which such a wrapped load attracts condensation. According to this feature of the invention, the load-carrying surface of a polypropylene slat is figured with projections of relatively high curvature i.e. is ribbed or ridged or is formed with projections which occupy a very small proportion of the potential area of contact with the carried load. As one practical example, it has been found that a polypropylene slat surface of some 200mm width and provided, parallel to its long dimension, with six equally spaced ridges each 3mm wide will readily permit a load to slip at a tilt angle of about $30^{\circ}$, representing a load discharge capability from the tilted slat comparable with that of a paper-wrapped load at low humidity.

In the construction of sorting conveyors, it is generally accepted that, having regard to the accuracy which is required in initiating and carrying out the selective discharge of the conveyor load, an endless driving chain provides the most satisfactory drive means. When a drive chain means is employed in the present invention, therefore, it is a further feature of the invention to provide such drive means with a chain condition monitor which conveniently may be a vibration detector positioned at the chain drive sprocket. One simple and inexpensive form of such vibration detector is a microphone but in circumstances where a microphone may not be convenient, other transducers such as pressure responsive ceramic cartridges may be preferred. By analysing and comparing the signal from such a detector with that generated by a chain known to be in good condition, advance warning of a developing fault condition may be obtained. According to a still further feature of the invention, chain tension, which gives a guide to potential chain overload conditions, may also be monitored by incorporating a force measuring transducer in the sprocket supporting drive head of the conveyor. Apart from regular observance of chain tension in facilitating chain maintenance as by regular adjustment of sprocket head take-up slides as the chain elongates due to wear, rapid increases in chain tension are an indication of a serious overload or of jamming somewhere in the conveyor system. By coupling a force measuring transducer to electrical or electronic circuitry having a very rapid time response, for example less than that taken for the chain to move through a distance of less than one-tenth of a slat pitch, it is possible from a high rate of chain tension increase to derive a signal which can be employed to stop the conveyor.

The invention will be described further, by way of example, with reference to the accompanying drawings, in which:-

Fig. 1 is a diagrammatic end elevation of a wheeled conveyor slat entering the upstream end of a discharge station in a conveyor embodying the invention,

Fig. 2 is a similar elevation illustrating the slat fully tilted in the discharge station,

Figs. 3 and 4 are respectively a diagrammatic end view and a plan view of a diverter arrangement provided by the invention for laterally displacing the wheeled slats,

Fig. 5 is a block circuit diagram of a controller provided for use with a sorting conveyor,

7.

Fig. 6 is a simplified side elevation of an elementary sorting conveyor incorporating the wheeled  carriers
and discharge stations of the invention, and

Fig. 7 is a plan view corresponding to Fig. 6.

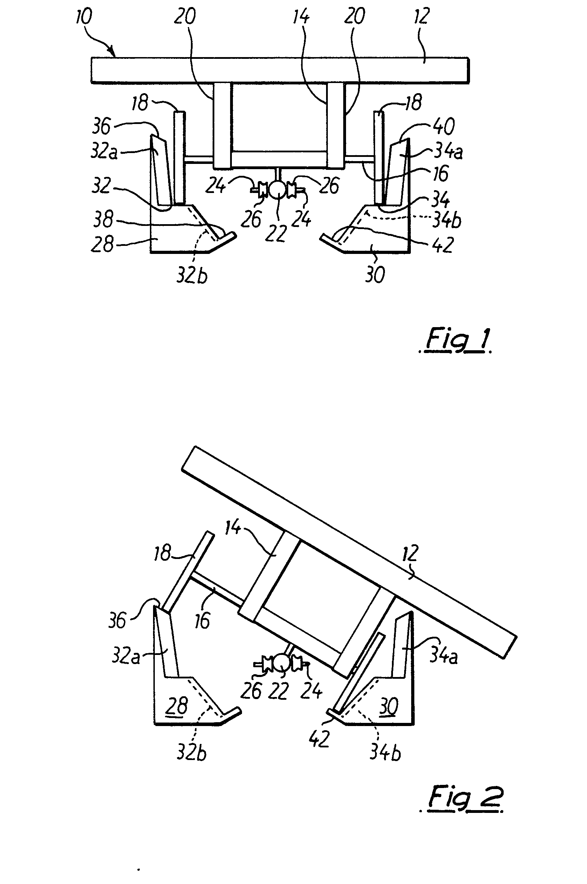

In the construction shown in Figs. 1 and 2, a
carrier member generally designated 10 comprises a load-
carrying slat 12 secured to or formed integrally with a
depending frame or carriage 14, through the lower end
of which passes a freely slidable and rotatable axle 16
provided with a wheel 18 at each of its ends.  As
indicated by the reference numeral 20, the frame 14 at
its lower end either acts as or is provided with thrust
bearings serving as lateral stops for the wheels 18.
Centrally below the slat 12, the frame 14 carries a
pivot 22 which extends in the longitudinal direction
of the conveyor and perpendicularly to the axle 18. Pins
24 extending laterally from the pivot enable it to be
attached to a towing chain system which includes two
parallel chains 26 with the pivot situated in the plane
between them.   The pins 24 are attached to the chains 26
at the slat pitch i.e. at distances equal to the dimension
of the slats in the longitudinal direction of the conveyor,
plus  the working clearance between the slats.

It is preferred in the practice of the invention
to assemble the conveyor itself from sections or units
of modular form and the discharge station of Figs. 1 and
2 will be seen to include a pair of such modules 28 and
30, spaced apart to provide main guide or running tracks
32 and 34  which are situated intermediate the upper and
lower edges of the modules and which serve to receive
and guide the wheels 18.  Where a module is required to
take part simply in defining a part of the  conveyor path
along which the carrier members 10 are to travel in a
horizontal position, the main tracks 32 and 34 are the
only ones with which it need be provided.  In Figs. 1

8.

and 2, however, the illustrated modules form a part of a discharge station and for this purpose, from the upstream end of each of the main tracks 32 and 34, there branches an upwardly inclined auxiliary track 32a, 34a respectively and a downwardly inclined auxiliary track 32b, 34b respectively, the inclinations being referred to the direction of travel of the conveyor, that is to say, into the plane of the drawings. It will be observed that both the upwardly inclined auxiliary tracks 32a and 34a branch from laterally outer regions of their respective main tracks and that both the downwardly inclined auxiliary tracks 32b and 34b branch from laterally inner regions of the main tracks. The spacing between the respective pairs of auxiliary tracks 32a and 34b on the one hand 32b and 34a on the other hand is selected to correspond to the spacing between the wheels 18.

The free upper edge of the module 28 constitutes an upper track 36, whilst a lower track is provided by an inwardly directed flange or similar portion 38 at the inside lower edge region of the module. The module 30 is similarly provided with an upper track 40 and a lower track 42. During normal running, when the chains 26 are driven in any convenient conventional manner (not shown) each carrier member 10 travels with its slat 12 in a horizontal position and its wheels 18 riding at the same height in the main tracks 32,34, equidistant from the end stops 20. When the carrier member 10 is required to undergo a discharge operation, however, its wheels are caused on entering a discharge station to be laterally displaced, as more fully described below, so that, according to the direction of the lateral displacement, one of the wheels 18 becomes located on one of the upwardly inclined auxiliary tracks and the other wheel 18 passes on to the co-operating downwardly inclined auxiliary path, with the result that the whole carrier member 10 is bodily tilted to incline the slat 12 into a discharge position. In this latter, fully tilted position, one of the wheels 18 comes to ride on the lower track, shown as the track 42 in Fig.2, at a lower level than the main track 34 whilst the other wheel 18 rides on the upper track 36, at a higher level than the main track 32. Under these conditions the lower wheel will be seen to be positioned against its associated end stop or thrust bearing 20.

It will be appreciated that, by appropriate positioning and choice of geometry of the various main and upper and lower running tracks and of the auxiliary, inter-connecting tracks, the pivot 22 of the carrier member 10 is enabled to follow an undisturbed path and that no significant lateral force is applied to the towing chains 26. It will also be noted that the arrangement and disposition of the slat 12 and frame 14 of the carrier member 10 is such that the wheels 18 may be of relatively large diameter, since they are unconstrained by any mechanism for pivoting the slat relative to the remainder of the carrier member.

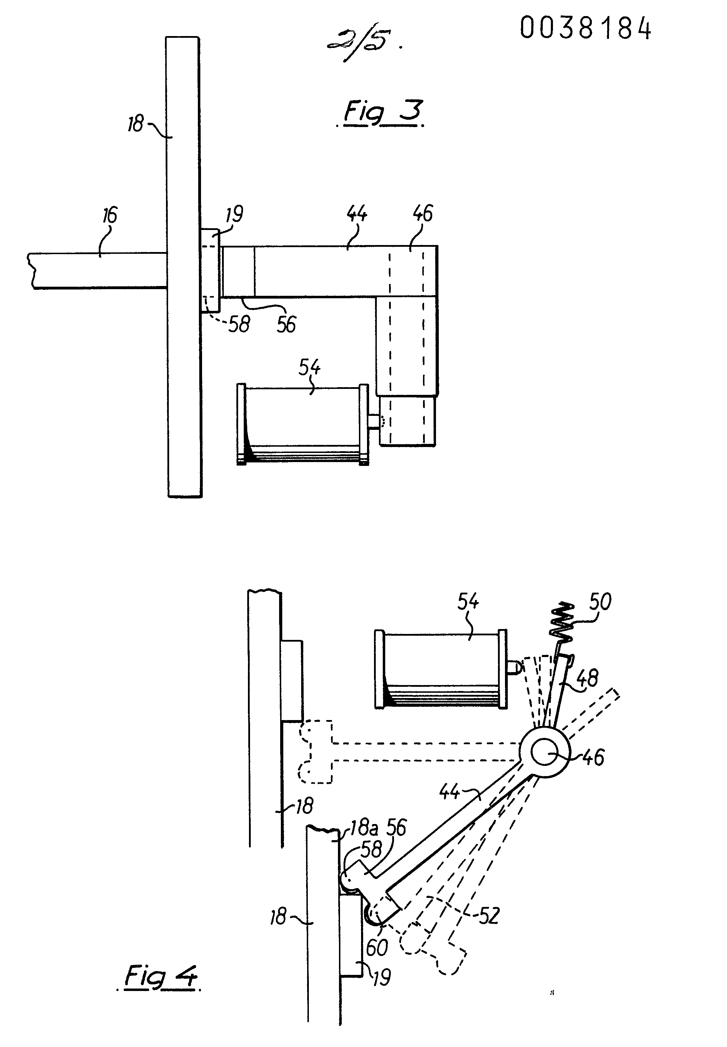

Figs. 3 and 4 illustrate diagrammatically, a preferred diverting mechanism for laterally displacing the wheels 18 of a carrier member when the latter is to be tilted into a discharge position. The mechanism includes a diverter arm 44 mounted at one end on a pivot 46 positioned adjacent the side of a module 28 or 30 and having its free end extending towards the path traversed by the wheels 18 at that side of the conveyor as the carrier members 10 move along the length of the conveyor in a horizontal position. Each carrier member wheel 18 is formed with a central boss 19 and a diverter arm extension 48 on the opposite side of the pivot 46 from the arm 44 itself is normally held by a spring 50

10.

in such a position that the free end of the arm 44 lies outside the path followed by the wheel bosses, as indicated by the reference numeral 52 in Fig. 4. In this latter position, the free end of the arm 44 is directed upstream of the movement of the carrier members 10.

When it is desired to tilt a selected carrier member, an actuator such as a solenoid 54 is operated to pivot the lever 48 and hence the diverter arm 44 until its free end presses against the plane surface 18a of the wheel just entering the discharge station and supporting the selected carrier member. The free end of the arm 44 will be seen from Fig. 4 to be formed with a transverse head 56 which at its downstream end carries a semi-cylindrical projection 58 extending forwardly of the arm and the arrangement is such that, as the wheel 18 moves along the conveyor path, the projection 58 engages in the junction between the boss 19 and the plane surface 18a of the wheel. As soon as this engagement takes place, the advancing wheel 18 removes the diverter arm from the control of the solenoid 54 and overrides the force exerted by the spring 50 to cause the arm to rotate about its pivot 46. In consequence of the rotational movement of the arm 44, the wheel 18 is laterally displaced to position it on the commencement of the selected inclined auxiliary track and as the wheel 18 assumes this displaced position, the arm 44 adopts an attitude substantially parallel to the wheel axle 16. A second projection 60 on the head at the end of the arm 44 then engages the central area of the wheel boss 19 and in so doing, disengages the projection 58 from the boss. The arm 44 then returns to the control of the spring 50 which restores it to its neutral position clear of the advancing wheels.

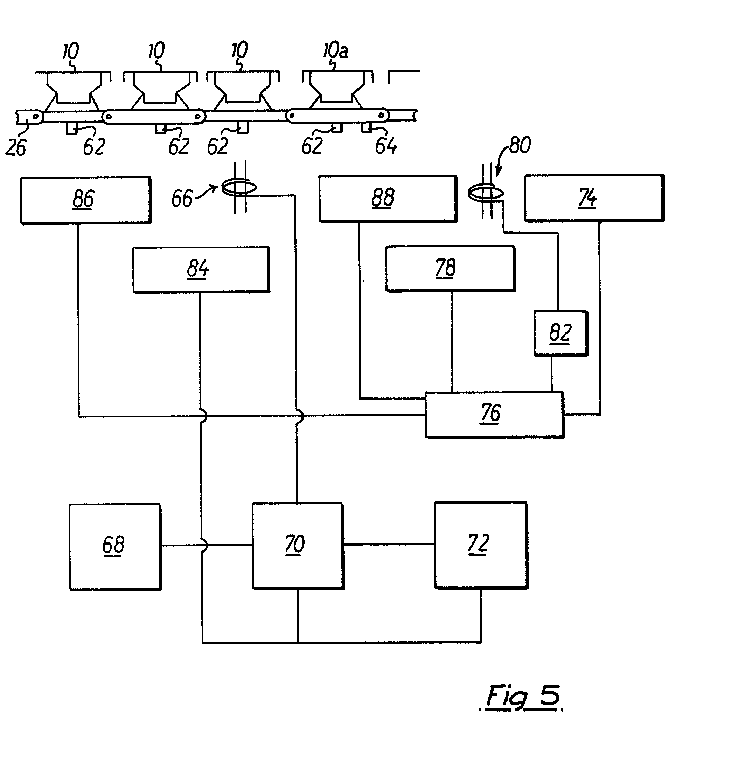

As mentioned above, tilting slat conveyors are particularly suitable for use as sorting conveyors and Fig. 5 illustrates in block diagrammatic form a controller proposed by the invention for controlling the operation of such a conveyor.

It has already been suggested, when a selected slat or group of slats is to be tilted in order to discharge a predetermined unit of load at a discharge station, to initiate that action at a particular time after the load unit has been placed on the conveyor. This time has to be exactly related to the speed of the conveyor and to the distance of the action point from the loading point. Inaccuracy can result, however, from several causes, including speed fluctuations, malfunction of devices for converting conveyor movement into time pulses, wear in connections between different modules or other components of the conveyor and elongation of the conveyor system as by tension changes originating in the drive means.

It has also been proposed that each place on the conveyor at which a unit load is to be introduced should be temporarily coded, either mechanically or magnetically, to correspond with the coded address of the discharge station at which action has to be taken. Similar inaccuracies to those described above, either in the running of the conveyor or due to ageing or to wear can cause such codes to be misread or can result in failure to read.

As shown in Fig. 5, in order to provide a method of addressing action stations along a moving conveyor which overcomes the foregoing disadvantages, the invention provides a signal generating point on each of the carrier members 10 which are connected serially together to form the endless conveyor path. Each station, typically a discharge station, where action is to be taken on the individual unit loads carried by the carrier members is provided with a corresponding signal detector positioned

12.

so that it provides a signal, such as a simple electrical pulse, each time that the signal generating point of a carrier member 10 passes close to it.

Conveniently, one of the carrier members, or a small number of the carrier members situated at equidistant subdivisions of the conveyor loop, is provided with a different signal generating feature from the remaining carrier members to enable it to act as a marker. For example, a marker carrier member may have two closely spaced signal generating points in place of the single such point with which the remaining carrier members are provided.

With each signal detector there is associated a counter which increments or decrements one unit for each oridinary signal which the detector at that station receives. When a marker carrier member passes the detector, however, the different signal pattern which it generates is arranged to cause the counter to reset to zero in the case of a normally incrementing counter or, in the case of a normally decrementing counter, to reset to a number at least equal to the number of carrier members in the conveyor loop between markers.

Each carrier member (or each carrier member between marker carrier members where there is more than one marker) thus has attributed to it, a characterising number which may be expressed, for example, in binary form if desired. At each discharge or other action station along the conveyor, at a given instant in time, the associated counter is reading the characterising number of the carrier member which has just actuated the signal detector of that station, the resulting identification of that carrier member being used to initiate e.g. discharge action upon it if so appro-priate.

13.

For this latter purpose, each conveyor action station is provided with an action storage register arranged to receive from the loading area of the conveyor, a signal identifying the characteristic member of any carrier member which is to be acted upon as it passes that station. Thus, when the counter at such a station reads the same number as one in the action storage register, action will be initiated. When a number in the action storage register has been utilised in this way, it is cancelled.

Referring now in more detail to Fig. 5, a number of carrier members 10 are shown arranged for towing by the chain 26 and the latter, purely for exemplary purposes, is illustrated as having one link connected to each carrier member. Beneath the carrier member 10 and situated centrally with respect thereto, each chain link is provided with a ferromagnetic projection 62 with the exception of a marker carrier member 10a, which is provided with an additional ferromagnetic projection 64, positioned in close-spaced relation to the projection 62 on that carrier member.

At each discharge station, an inductive proximity detector 66 is so positioned that it produces an electrical pulse each time that one of the projections 62 or 64 passes close to it, the resulting signal being passed to a binary counter 68. The counter 68 is also so arranged that, each time it receives a double pulse as a result of the passage of the marker carrier member 10a, it resets to zero. Each subsequent single pulse resulting from the passing of a single projection 62 on one of the carrier members 10 increments the counter by one unit. The reading of the counter 68 at any moment is passed to a comparator 70 which also reads continuously the numbers in the action storage register 72.

14.

At the loading area of the conveyor, a keyboard transmitter 74 is instructed by the operator that a particular article, such as a package, entering the conveyor is to be discharged at a selected discharge station. This instruction is passed from the transmitter 74 to a central controller 76 which selects the input circuit of the action storage register at the selected discharge station.

As the package commences on its journey along the conveyor, an input monitor 78 detects its leading edge and passes a corresponding signal to the central controller 76. A proximity detector 80 which also generates pulses responsive to passage of the ferromagnetic projections 62 and 64 is positioned close to the input monitor 78 and signals to a counter 82 which, in a manner similar to that described above, calculates the characteristic number of the carrier member on whose slat the leading edge of the package is located.

This characteristic number is passed by way of the central controller 76 to the action storage register at the selected discharge station, as determined by the transmitter 74. When the comparator 70 determines that the characteristic number which it is currently reading from the counter 68 is the same as a characteristic number stored in the action storage register 72, it passes a signal to a tilt actuator 84, which may typically include the solenoid 54, to initiate tilting of the slat thus identified. At the same time, the signal from the comparator instructs the action storage register 72 to cancel the characteristic number which has just been used.

When the slat of the carrier member 10 which has just been caused to tilt by the above sequence of events has reached an advanced stage in its tilting movement but before it is located in a fully tilted travelling position, a tilt detector 86 may be actuated by the passage of a part of the carrier member. The tilt detector 86 then passes a signal to the central controller 76 which compares the instant in time when the tilting slat actually passed the detector 86 with the forecast instant in time when it should have passed the detector if the instructions from the keyboard transmitter 74 has been correctly carried out at the discharge station. If there is any deviation in time outside preset limits or if there is no signal from the tilt detector 86, the central controller 76 is arranged to give a warning to the operator.

It will be appreciated that the foregoing description relates to the situation where the package occupies the slat of only one carrier member 10. Where the package occupies more than one slat, a similar sequence of events takes place, except that a group of successive characteristic numbers is entered in the action storage register 72. The last of the numbers in the group is the characteristic number of the slat on which the input monitor 78 identifies the trailing edge of the package.

However, in a large, high occupancy conveyor system the adoption of such a procedure would require a very high numerical memory capacity in the action storage registers 72. To avoid this difficulty, the system input monitor 78 and the slat counter 82 are shown, by way of example, as being supplemented by a package length counter 88 which signals to the central controller 76, the number of slats which the slat occupies in addition to the slat on which its leading edge rests. This slats-occupied information is passed by the central controller 76 to a supplementary section of the action storage register 72 so that the command from
the comparator 70 to the tilt actuator 84 to initiate
the tilting operation is repeated for successive slats
according to the slats-occupied number held in the
supplementary section of the action storage register.
After use in this way, the slats-occupied number is
cancelled.

Alternative methods of economising in the capacity
of the action storage register may, of course, be employed.

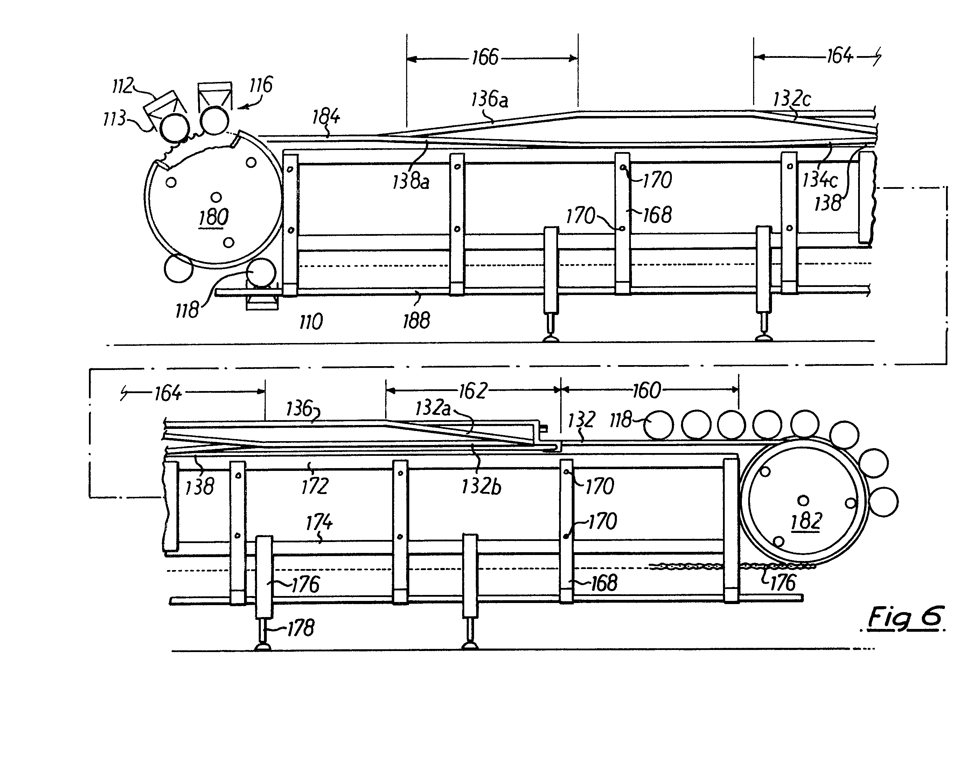

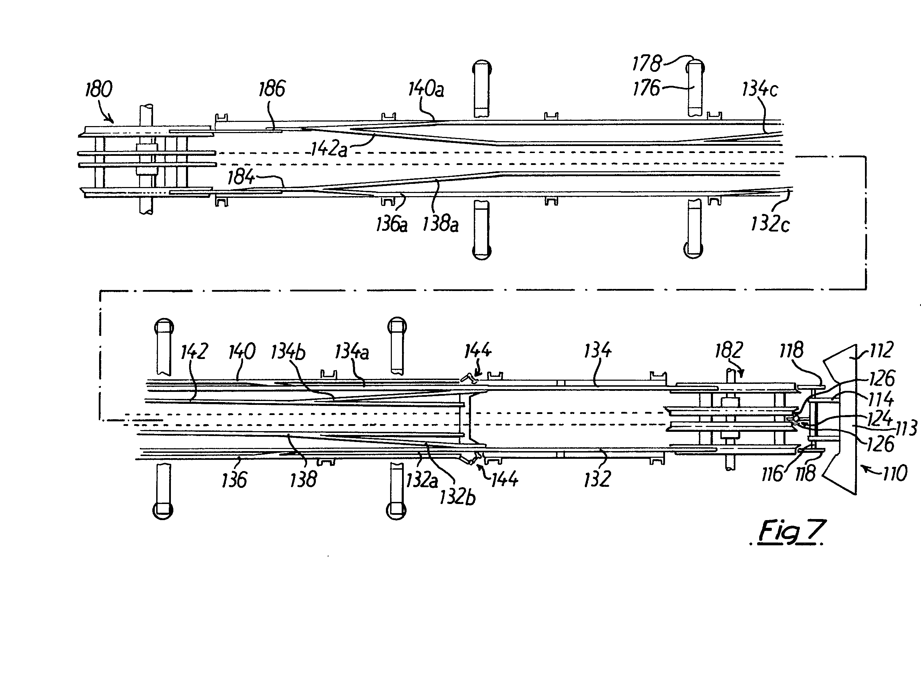

A complete although simplified sorting conveyor
embodying the invention is illustrated in Figs. 6 and 7
and will be seen to include a load input section 160, a
first discharge station 162, a second discharge station
164 and a rectification station 166. As will be observed
from the drawings, the conveyor is built in sections or
modules each comprising a frame including upright members
168 spaced apart by spacers 170 and carried by upper and
lower horizontal frame members 172,174, of which the
lower frame members 174 are supported on legs 176 terminating in adjustable feet 178. Drive and return sprockets
180 and 182 for drive chains 126 are supported in any
convenient manner, for example, by outrigger means
(not shown) extending from the endmost frame sections.

Carrier members 110 have slats 112 secured to a
depending carriage 114, which is provided at its lower
end with a freely slidable and rotatable axle 116 for a
pair of wheels 118. The carrier members are each
connected to the driving chains 126 by a pin and pivot
assembly generally designated 124 and similar to that
shown in Figs. 1 and 2. It will be noted that the
slats 112 shown in Fig. 6 have flexible side walls 113
which increase in depth from the middle of the slat
up to its ends to prevent the creation of gaps between
periodically converging surfaces of adjacent slats.

17.

Each section of the conveyor is provided with main guide rails 132 and 134 on which the wheels 118 run when the carrier 110 is required to travel in a horizontal position, as in the end sections supporting the drive and return sprockets 180,182. Discharge stations such as that typified at 164 however, additionally have upwardly inclined auxiliary rails 132a and 134a and respective downwardly inclined auxiliary rails 132b and 134b branching from the main rails 132 and 134 and on to which the carrier wheels 118 can be selectively diverted by diverter arms 144 in a manner similar to that described with respect to Figs. 3 and 4. The upwardly inclined auxiliary rail 132a merges into a top running rail 136 while the downwardly inclined auxiliary rail 132b merges into a bottom running rail 138. The auxiliary rails 134a and 134b similarly merge into respective top and bottom running rails 140 and 142. Carriers 110 may thus be tilted to one side or the other of the conveyor frame assembly by operation of the appropriate one of the diverter arm assemblies 144.

As will be appreciated, any number of selectable discharge stations similar to the discharge station 162 may be provided along the length of the conveyor path, dependent upon the sorting function which the conveyor is required to perform. To guard against the possibility of any load remaining upon the conveyor after it has passed through the last of the selectable discharge stations 162 prior to the drive sprockets 180, however, that discharge station 162 is followed by a compulsory discharge station 164 wherein the terminal portion 132c of the main running rail 132 is upwardly and laterally inclined to merge with the top rail 136 and the corresponding portion 134c of the main running rail 134 is downwardly and laterally inclined to merge with the bottom

18.

running rail 138. All carriers 110 still travelling in a horizontal position on the main rails 132,134 as they enter the compulsory discharge station 164 are therefore compulsorily tilted to discharge any articles which may, even inadvertently, still remain on them.

For the purpose of restoring all the carriers 110 to a horizontal condition before they pass around the sprockets 180, a rectification section 166 is interposed between the sprockets and the compulsory discharge station 164. In the rectification section 166, the top running rail 136 is downwardly and laterally inwardly inclined as indicated at 136a whilst the bottom running rail 138 is upwardly and outwardly inclined as indicated at 138a in such a manner that the two terminal rail portions 136a and 138a meet and merge into a single running rail 184 which terminates adjacent the drive sprocket assembly 180. The top running rail 140 is also downwardly and inwardly inclined as shown at 140a and merges with an upwardly and outwardly inclined rail portion 142a of the bottom running rail 142 into a single running rail 186 similar to the rail 184, the rails 184 and 186 being respectively coaxial with the main running rails 132 and 134. Carriers 110 which, during their movement along the conveyor path, have been diverted to run on the top rail 136 and bottom rail 142 are thus restored to a horizontal position by the inclined rail portions 136a and 142a. Rail portions 140a and 138a perform a similar function in respect of carriers 110 which have been diverted to run on the rails 140 and 138.

Horizontal return rails 188 extend along the bottom of the conveyor frame to receive the wheels 118 of carriers 110 which have passed around the sprocket assembly 180 for return to the commencement of the upper run of the conveyor.

19.

# CLAIMS

1. A conveyor comprising a plurality of individual carriers (12) constrained for movement along a predetermined guide path (32,34), characterised in that the carriers (12) themselves are wheeled carriers supported in a load-carrying manner directly upon said path (32, 34) and that means (144) are arranged for selectively diverting the carriers (12) from the guide path (32,34) on to auxiliary guide paths (32a, 36; 32b,38; 34a,40; 34b,42) having configurations acting bodily to tilt the carriers (12) in their movement along said auxiliary paths.

2. A conveyor comprising guide means including a pair of spaced, parallel main guide paths (32,34), endless drive means (26) adjacent said guide means, a plurality of wheeled carrier members (12) supported on said guide means to define a conveying surface and coupled to said drive means (26) for propelling said carrier members (12) around said guide means, and a plurality of discharge stations (162) arranged along said guide means, characterised in that there is provided at each discharge station at least one auxiliary path (32a, 32b, 34a, 34b) branching from each main guide path (32,34) at the upstream end of said discharge station and extending in the direction of movement of said carrier members (12), with one (32a or 34a) of said auxiliary guide paths being upwardly inclined towards its downstream end and the other auxiliary guide path (32b or 34b) being downwardly inclined, and means (144) for selectively diverting said carrier members (12) at the upstream end of each discharge station (162) from said main guide paths (32,34) on to said auxiliary paths, whereby to tilt each diverted carrier member in a direction transverse to its direction of movement along said paths.

# 0038184

20.

3. A conveyor as claimed in claim 2 wherein the guide means comprises a guide track including a pair of running rails constituting said main guide paths (32,34) and auxiliary rails constituting said auxiliary guide paths (32a, 32b, 34a, 34b).

4. A conveyor as claimed in claim 2 or 3 wherein there are two auxiliary guide paths branching one from each side of each main guide path (32,34) at the upstream end of each discharge station, with one such auxiliary path (32a; 34a) upwardly inclined and the other (32b; 34b) downwardly inclined, such that each co-operates with an auxiliary guide path of opposite inclination branching from the other main guide path, thus enabling a selected carrier member (12) to be tilted to either one side of the guide means or to the other side thereof, as required.

5. A conveyor as claimed 2, 3 or 4 in which each said means (144) for selectively diverting the carrier members comprises a rigid pivoted arm (44) mounted to present its free end adjacent the guide means and capable of being displaced to intercept a suitable side region (19) of a carrier member (12), the subsequent movement of which, after interception has taken place, is employed to rotate the arm (44) on its pivot (46) and cause it simultaneously to impart the required lateral movement or displacement to the carrier member (12).

6. A conveyor as claimed in any of claims 1 to 5 wherein each carrier member (12) is in the form of a wheeled slat having a skirt arrangement defined by a plurality of side walls (113) which are flexible and which increase in depth from the middle of that slat towards and up to its end edges so as to prevent the formation of gaps between the periodically converging surfaces of adjacent slats.

7. A conveyor as claimed in claim 6 wherein the side walls (113) of adjacent slats press resiliently against one another to reduce the possibility of small articles passing between such adjacent slats.

8. A conveyor as claimed in any of claims 1 to 5 wherein each carrier member is in the form of a slat constructed of polypropylene having a load-carrying surface figured with upstanding curved projections.

9. A conveyor as claimed in any of claims 2 to 8 wherein the drive means comprises an endless driving chain passing around sprockets and having a chain condition monitor in the form of a vibration detector positioned adjacent a driven one of said sprockets.

10. A conveyor as claimed in claim 9 in which chain tension is monitored by the incorporation of a force measuring transducer in a sprocket supporting drive head of the conveyor.

Fig_1

Fig_2

0038184

_Fig 3._

_Fig 4._

Fig 5.

Fig 6

*Fig 7*

0038184